# EUROPÄISCHE PATENTSCHRIFT

(11) **EP 2 635 780 B1**
(45) Veröffentlichungstag und Bekanntmachung des Hinweises auf die Patenterteilung: **25.06.2014**
(21) Anmeldenummer: 11779547.6
(22) Anmeldetag: 21.09.2011
(51) Int. Cl.: F02B 19/10

(54) **HUBKOLBENMOTOR**
RECIPROCATING PISTON ENGINE
MOTEUR À PISTON ALTERNATIF

(30) Priorität: 02.11.2010 AT 18032010
(43) Veröffentlichungstag der Anmeldung: 11.09.2013
(73) Patentinhaber: GE Jenbacher GmbH & Co OG, 6200 Jenbach (AT)
(72) Erfinder: REDTENBACHER, Christoph, 8010 Graz (AT); SCHNEßL, Eduard, A-8934 Altenmarkt (AT); WINTER, Hubert, A-8042 Graz (AT); WIMMER, Andreas, A-8010 Graz (AT); KLINKNER, Martin, 38519 Viernheim (DE)
(74) Vertreter: Gangl, Markus
(86) Internationale Anmeldenummer: PCT/AT2011/000386
(87) Internationale Veröffentlichungsnummer: WO 2012/058700

(56) Entgegenhaltungen:
- WO-A2-2009/109694
- JP-A- 2008 169 706
- JP-U- H0 630 433
- US-A- 4 232 638

## Beschreibung

Die vorliegende Erfindung betrifft einen Hubkolbenmotor mit wenigstens einem zwischen einem Kolben und einem Zylinder ausgebildeten Hauptbrennraum, der über einen Steigkanal mit einer eine Vorkammerachse aufweisende Vorkammer in Verbindung steht, sodass durch den Kolben aus dem Hauptbrennraum in den Steigkanal gedrücktes Gas-Luft-Gemisch in der Vorkammer eine Steigströmung bildet, wobei in die Vorkammer ein vom Steigkanal gesonderter Gaszufuhrkanal einmündet und wobei der Steigkanal und der Gaszufuhrkanal so zueinander ausgerichtet sind, dass über den Gaszufuhrkanal in die Vorkammer zugeführtes Gas im Wesentlichen frontal auf die Steigströmung trifft. Die Erfindung betrifft weiters ein Verfahren zum Betreiben eines derartigen Hubkolbenmotors.

Hubkolbenmotoren mit Bohrungsdurchmessern der Zylinder ab ca. 200 mm werden häufig als Vorkammermotoren betrieben. Die Vorkammer hat die Aufgabe, die Zündenergie der Zündkerze zu verstärken, um die Entflammung des mageren Gemisches im Hauptbrennraum zu ermöglichen.

Wird die Vorkammer durch einen vom Steigkanal gesonderten Gaszufuhrkanal gasgespült betrieben (um den Energieinhalt der Kammer zu erhöhen), erfolgt die Anreicherung der Kammer mit Brenngas üblicherweise im Ladungswechsel über ein mit dem Gaszufuhrkanal verbundenes druckgesteuertes Gasventil.

Im Verdichtungstakt strömt mageres Gas-Luft-Gemisch aus dem Hauptbrennraum in die Vorkammer und vermischt sich mit dem dort befindlichen angereicherten Gemisch. Bis zum Zündzeitpunkt kann das Gemisch in der Vorkammer weitgehend homogenisiert werden, jedoch verbleiben lokal unzureichend durchmischte Zonen. Durch lokal fette und magere Zonen verläuft die Verbrennung unvollständig und langsamer, wodurch weniger Zündimpuls für die Entflammung des Hauptbrennraums zur Verfügung seht. Zudem verschlechtert sich der Wirkungsgrad. Zusätzlich verbleibt im Gaszufuhrkanal eine sehr fette Zone, sodass es hier während der Verbrennung zur Bildung von Rußpartikeln kommt. Im Ladungswechsel gelangen diese Partikel über die Vorkammer in den Hauptbrennraum und im weiteren über die Auslasskanäle in das Abgassystem. Das hat zur Folge, dass es zu Problemen durch Verschmutzung der nachstehenden Systemkomponenten kommt und dass ohne entsprechende Abgasnachbehandlung Rußpartikel an die Umwelt gelangen.

Ein Hubkolbenmotor mit den Merkmalen des Oberbegriffs des Anspruchs 1 geht aus JP 6-30433 U hervor. In dieser Schrift ist eine außermittige Anordnung eines Steigkanals vorgesehen, wobei die Achsen des Steigkanals und eines Gaszufuhrkanals im Wesentlichen fluchten.

Die JP 2008169706 A zeigt einen Hubkolbenmotor mit einem zentral angeordneten Steigkanal und einen eine schräg verlaufende Achse Gaszufuhrkanal. Die Achse des Gaszufuhrkanals und die Achse des Steigkanals sind nicht fluchtend angeordnet.

Aufgabe der Erfindung ist die Bereitstellung eines gattungsgemäßen Hubkolbenmotors, bei welchem die oben genannten Probleme zumindest teilweise behoben sind.

Dies wird durch einen Hubkolbenmotor gemäß Anspruch 1 und ein Verfahren gemäß Anspruch 4 gelöst.

Die Erfindung bewirkt eine Verbesserung der Homogenisierung des Gemisches in der Vorkammer mit der damit verbundenen besseren Performance (schnelleres Durchbrennen des Gemisches, bessere Entfachung des Hauptbrennraumes) sowie eine Reduzierung der Rußbildung durch fette Zonen im Gaszufuhrkanal.

Die Spülung der Vorkammer über den Gaszufuhrkanal findet im Verdichtungstakt statt. Die Anordnung von Steigkanal, Vorkammer und Gaszufuhrkanal ist so zu gestalten, dass die Achsen von Steigkanal und Gaszufuhrkanal im günstigsten Falle fluchten oder aber maximal einen geringen Winkel zueinander einnehmen. In keinem Fall aber sollte der Winkel so groß sein, dass die Achse des Gaszufuhrkanals die Zylinderwand des Steigkanals auf Höhe der Einmündung des Steigkanals in die Vorkammer durchstößt. Gleichzeitig muss die Vorkammer so gestaltet sein, dass sie nicht durch Hinterschnitte oder sonstige Formgebung das freie Volumen zwischen Steigkanal und Gaszufuhrkanal verstellt. Ziel dieser Anordnung ist es, bereits während des Einblasevorganges eine gute Vormischung des über den Gaszufuhrkanal eingebrachten Gases mit dem aus dem Hauptbrennraum in die Vorkammer einströmenden Gemisch zu erreichen. Durch ein möglichst frontales Aufeinandertreffen der beiden Strömungen wird der Gemischbildungseffekt verstärkt, wie sowohl mit Hilfe von CFD - Simulationen als auch mittels optischen Untersuchungen in einer Einblasekammer bestätigt werden kann.

Weiters sollte für den Einblasevorgang genügend Gasdruck zur Verfügung stehen, damit trotz steigendem Kompressionsdruck in der Verdichtungsphase eine ausreichende Eindringtiefe des aus dem Gaszufuhrkanal austretenden Einblasestrahles erreicht wird, was sich positiv auf die Vormischung auswirkt.

Die Anordnung der Kanäle bietet zusätzlich den Vorteil, dass nach Abschluss des Einblasevorganges mageres Gemisch in Richtung Gaszufuhrkanal strömt, was eine Verdünnung der fetten Zone im Gaszufuhrkanal bewirkt. Wie Untersuchungen am Prüfstand gezeigt haben, kann die Rußentstehung im Gaszufuhrkanal damit signifikant reduziert werden.

Besonders bevorzugt ist eine weitere Verbesserung der Gemischbildung durch Erzeugung einer Tumbleströmung in der Vorkammer vorgesehen. Der Steigkanal der Vorkammer ist dabei so asymmetrisch bzw. außermittig zu positionieren, dass das aus dem Hauptbrennraum in die Vorkammer einströmende magere Gemisch dort eine definierte Tumbleströmung erzeugt. Diese Tumbleströmung ermöglicht eine weitläufige Erfassung der Vorkammer, sodass das durch Gegenströmen bereits vorgemischte angereicherte Gemisch weiter homogenisiert werden kann. Die Asymmetrie erfolgt unter Einhaltung der oben beschriebenen geometrischen Bedingungen durch Neigung des Steigkanals zur Vorkammerachse. Ob eine Tumbleströmung bei einer bestimmten Geometrie ausgebildet wird, lässt sich leicht durch numerische Simulation oder bei Versuchsmotoren feststellen.

Es wurde davon gesprochen, dass die Steigströmung von einem Gas-Luft-Gemisch gebildet wird und auf über den Gaszufuhrkanal zugeführtes Gas trifft. Dies soll nicht den Eindruck erwecken, als ob das über den Gaszufuhrkanal zugeführte Gas nur ein reines Gas in dem Sinne sein dürfe, dass das Gas nur aus Treibgas ohne Luftbeimischung besteht. Will man exakt formulieren, müssten sowohl das die Steigströmung bildende Gas als auch das über den Gaszufuhrkanal zugeführte Gas jeweils als Treibgas-Luft-Gemisch bezeichnet werden, wobei das die Steigströmung bildende Gas stets eine relevante Beimischung von Luft haben wird, während es durchaus vorstellbar ist, dass das über den Gaszufuhrkanal zugeführte Gas tatsächlich im Wesentlichen reines Gas ohne Luftbeimischung ist. Aus Gründen der leichteren Lesbarkeit wurde auf die Verwendung der exakten Terminologie verzichtet, was jedoch nicht als Beschränkung des Schutzumfanges verstanden werden soll.

Der erfindungsgemäße Hubkolbenmotor ist besonders bevorzugt als stationärer Gasmotor ausgebildet.

Weitere Vorteile und Einzelheiten der Erfindung ergeben sich anhand der Figuren sowie der dazugehörigen Figurenbeschreibung. Dabei zeigen:
- Fig. 1: eine Schnittdarstellung des für die Erfindung relevanten Teils eines Hubkolbenmotors,
- Fig. 2a, 2b: eine Draufsicht und eine perspektivische Ansicht auf eine bei der Erfindung zum Einsatz kommende Vorkammer außerhalb ihrer Einbaulage im Hubkolbenmotor und
- Fig.3: eine perspektivische Ansicht zur Vorkammer mit Darstellung einer Zündeinrichtung und des Gasventils.

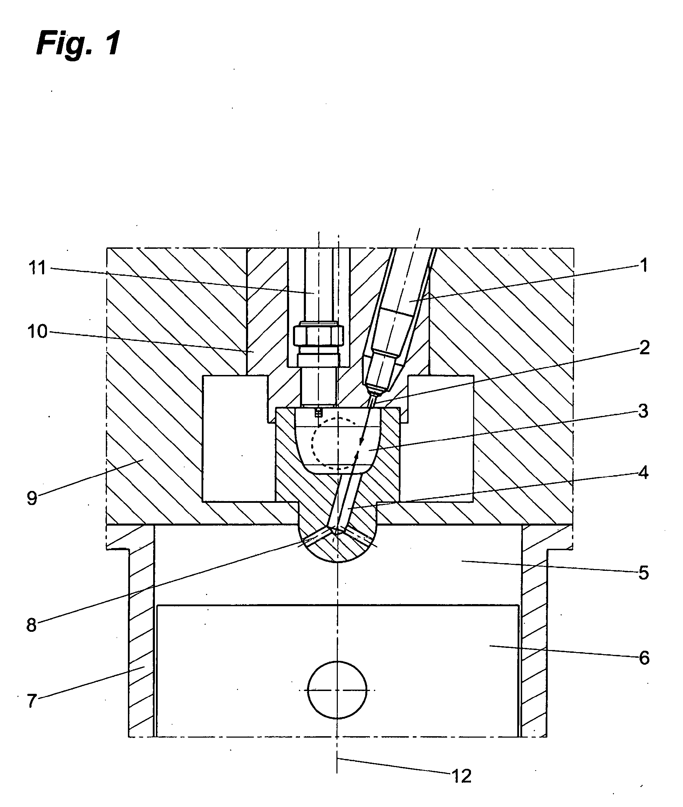

Die Fig. 1 bezieht sich auf das bevorzugte Ausführungsbeispiel der Erfindung, bei welchem nicht nur der Steigkanal 4 und der Gaszufuhrkanal 2 so aufeinander ausgerichtet sind, dass über den Gaszufuhrkanal 2 in die Vorkammer 3 zugeführtes Gas im Wesentlichen frontal auf die aus dem Steigkanal 4 austretende Steigströmung trifft (durchgezogene Pfeile in Fig. 1), sondern es ist zusätzlich vorgesehen, dass der Steigkanal 4 so außermittig in die Vorkammer 3 einmündet, dass eine definierte Tumbleströmung entsteht (strichlierter Pfeil in Fig. 1).

Beim Verfahren zum Betrieb des Hubkolbenmotors ist erfindungsgemäß vorgesehen, dass in jener Phase, in welcher durch den Kolben 6 aus dem Hauptbrennraum 5 über die Überstrombohrungen 8 und den Steigkanal 4 gedrückt wird (Verdichtungstakt) Gas über den Gaszufuhrkanal 2 in die Vorkammer 3 geleitet wird. Dies erfolgt über das Gasventil 1, welches vorzugsweise als elektrisch ansteuerbarer Gasinjektor ausgebildet ist.

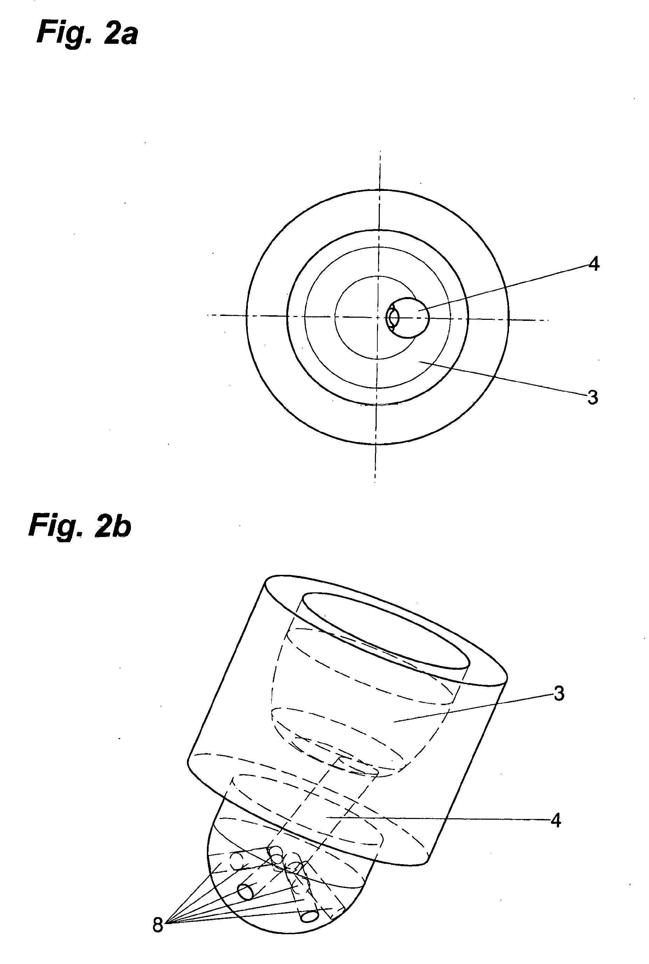

Aus Fig. 2a geht die bevorzugt vorgesehene außermittige Einmündung des Steigkanals 4 in die Vorkammer 3 hervor. Fig. 2b zeigt eine entsprechende perspektivische Ansicht, wobei sechs Überströmbohrungen 8 erkennbar sind, die den nicht dargestellten Hauptbrennraum 5 mit dem Steigkanal 4 verbinden.

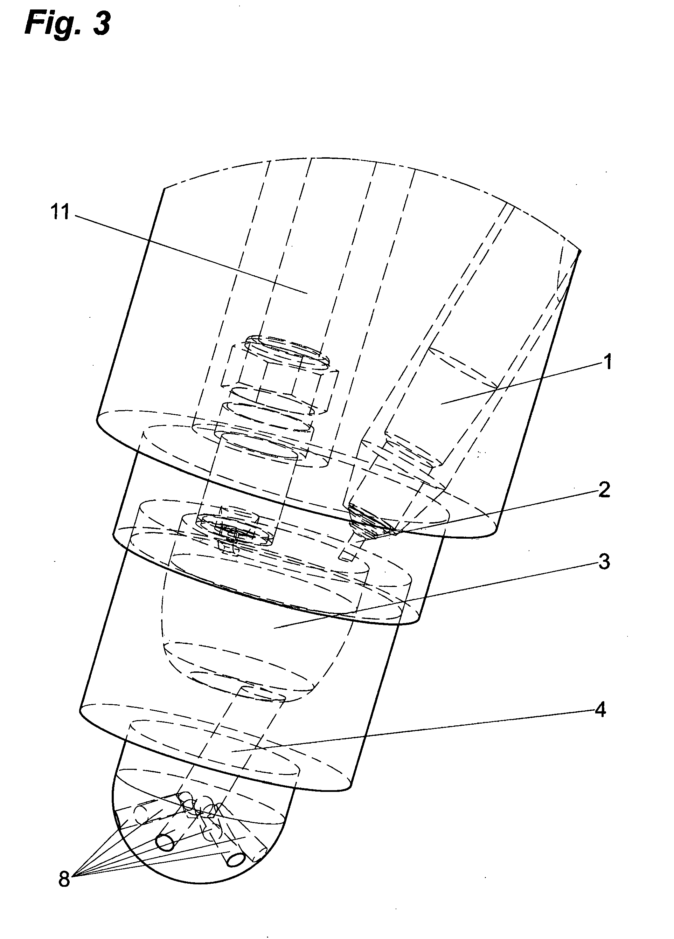

Fig. 3 zeigt eine perspektivische Ansicht zu den relevanten Teilen der Fig. 1.
- **1**: Gasventil
- **2**: Gaszufuhrkanal
- **3**: Vorkammer
- **4**: Steigkanal
- **5**: Hauptbrennraum
- **6**: Kolben
- **7**: Zylinderbuchse
- **8**: Überströmbohrungen
- **9**: Zylinderkopf
- **10**: Zündkerzen hülse
- **11**: Zündkerze
- **12**: Vorkammerachse

## Patentansprüche

1. Hubkolbenmotor mit wenigstens einem zwischen einem Kolben (6) und einem Zylinder (7) ausgebildeten Hauptbrennraum (5), der über einen Steigkanal (4) mit einer eine Vorkammerachse (12) aufweisende Vorkammer (3) in Verbindung steht, sodass durch den Kolben (6) aus dem Hauptbrennraum (5) in den Steigkanal (4) gedrücktes Gas-Luft-Gemisch in der Vorkammer (3) eine Steigströmung bildet, wobei in die Vorkammer (3) ein vom Steigkanal (4) gesonderter Gaszufuhrkanal (2) einmündet, und wobei der Steigkanal (4) und der Gaszufuhrkanal (2) so zueinander ausgerichtet sind, dass über den Gaszufuhrkanal (2) in die Vorkammer (3) zugeführtes Gas im Wesentlichen frontal auf die Steigströmung trifft, **dadurch gekennzeichnet, dass** der Steigkanal (4) geneigt zur Vorkammerachse (12) verläuft.

2. Hubkolbenmotor nach Anspruch 1, **dadurch gekennzeichnet, dass** der Steigkanal (4) außermittig in die Vorkammer (3) einmündet.

3. Hubkolbenmotor nach Anspruch 1 oder 2, **dadurch gekennzeichnet, dass** der Gaszufuhrkanal (2) mit einem Gasventil (1), vorzugsweise einem elektrisch ansteuerbaren Gasinjektor, verbunden ist.

4. Verfahren zum Betreiben eines Hubkolbenmotors nach einem der Ansprüche 1 bis 3, **dadurch gekennzeichnet, dass** in jener Phase, in welcher durch den Kolben (6) aus dem Hauptbrennraum (5) Gas-Luft-Gemisch in den Steigkanal (4) gedrückt wird, Gas über den Gaszufuhrkanal (2) in die Vorkammer (3) geleitet wird.

## Claims

1. A reciprocating piston engine comprising a main combustion chamber (5) which is formed between a piston (6) and a cylinder (7) and which is in communication by way of a riser passage (4) to a pre-chamber (3) having a pre-chamber axis (12) so that gas-air mixture pushed by the piston (6) from the main combustion chamber (5) into the riser passage (4) forms a rising flow in the pre-chamber (3), wherein a gas feed passage (2) separate from the riser passage (4) opens into the pre-chamber (3) and wherein the riser passage (4) and the gas feed passage (2) are so oriented relative to each other that gas fed into the pre-chamber (3) by way of the gas feed passage (2) impinges substantially frontally on to the rising flow, **characterised in that** the riser passage (4) extends inclinedly relative to the pre-chamber axis (12).

2. A reciprocating piston engine as set forth in claim 1 **characterised in that** the riser passage (4) opens off-center into the pre-chamber (3).

3. A reciprocating piston engine as set forth in claim 1 or claim 2 **characterised in that** the gas feed passage (2) is connected to a gas valve (1), preferably an electrically actuable gas injector.

4. A method of operating a reciprocating piston engine as set forth in one of claims 1 through 3 **characterised in that in that** phase in which gas-air mixture is pushed into the riser passage (4) by the piston (6) from the main combustion chamber (5) gas is passed into the pre-chamber (3) by way of the gas feed passage (2).

## Revendications

1. Moteur à piston alternatif avec au moins un espace de combustion principal (5) conçu entre un piston (6) et un cylindre (7), qui se trouve en relation par un canal de montée (4) avec une chambre de précombustion (3) présentant un axe de chambre de précombustion (12) de sorte qu'un mélange gaz-air poussé par le piston (6) à l'extérieur de l'espace de combustion principal (5) dans le canal de montée (4) forme un courant ascendant dans la chambre de précombustion (3), dans lequel un canal d'amenée de gaz (2) distinct du canal de montée (4) débouche dans la chambre de précombustion (3), et dans lequel le canal de montée (4) et le canal d'amenée de gaz (2) sont orientés l'un vers l'autre de telle manière que le gaz amené par le canal d'amenée de gaz (2) dans la chambre de précombustion (3) touche essentiellement de façon frontale le courant ascendant, **caractérisé en ce que** le canal de montée (4) s'étend de façon inclinée par rapport à l'axe de la chambre de précombustion (12).

2. Moteur à piston alternatif selon la revendication 1, **caractérisé en ce que** le canal de montée (4) débouche de façon décentrée dans la chambre de précombustion (3).

3. Moteur à piston alternatif selon la revendication 1 ou 2, **caractérisé en ce que** le canal d'amenée de gaz (2) est relié à une soupape de gaz (1) de préférence à un injecteur de gaz pouvant être commandé électriquement.

4. Procédé d'actionnement d'un moteur à piston alternatif selon l'une des revendications 1 à 3, **caractérisé en ce que** dans chaque phase, dans laquelle un mélange gaz-air est poussé par le piston (6) à l'extérieur de l'espace de combustion principal (5) dans le canal de montée (4), du gaz est conduit par le canal d'amenée de gaz (2) dans la chambre de précombustion (3).
